Europäisches Patentamt

(19) European Patent Office

Office européen des brevets

(11) Veröffentlichungsnummer: **0 239 586**
**B1**

(12) **EUROPÄISCHE PATENTSCHRIFT**

(45) Veröffentlichungstag der Patentschrift: **19.09.90**

(51) Int. Cl.⁵: **B 65 G 43/02**

(21) Anmeldenummer: **86905295.1**

(22) Anmeldetag: **22.09.86**

(86) Internationale Anmeldenummer:
**PCT/EP86/00558**

(87) Internationale Veröffentlichungsnummer:
**WO 87/02017 09.04.87 Gazette 87/08**

(54) VORRICHTUNG ZUR ERMITTLUNG VON KETTENRISSEN KETTENGETRIEBENER BETRIEBSMITTEL.

(30) Priorität: **26.09.85 DE 3534307**

(43) Veröffentlichungstag der Anmeldung:
**07.10.87 Patentblatt 87/41**

(45) Bekanntmachung des Hinweises auf die
Patenterteilung:
**19.09.90 Patentblatt 90/38**

(84) Benannte Vertragsstaaten:
**FR GB**

(56) Entgegenhaltungen:
**DE-A-2 916 812**
**DE-A-2 940 094**
**US-A-4 106 005**

**Patents Abstracts of Japan, Band 8, Nr. 189,**
**(M-321)(1626) 30. August 1984 & JP, A, 5978007**
**(TSUBAKIMOTO CHAIN K.K.) 4. Mai 1984**

(73) Patentinhaber: **Bergwerksverband GmbH**
**Franz-Fischer-Weg 61**
**D-4300 Essen 13 (DE)**

(72) Erfinder: **BRYCHTA, Peter**
**Frankenplatz 29**
**D-5600 Wuppertal 1 (DE)**
Erfinder: **WIECHERS, Klaus-Peter**
**Lohstrasse 59**
**D-4390 Gladbeck (DE)**

(74) Vertreter: **Weydert, Robert et al**
**OFFICE DENNEMEYER S.à.r.l. P.O. Box 1502**
**L-1015 Luxembourg (LU)**

Courier Press, Leamington Spa, England.

**Beschreibung**

Die Erfindung betrifft eine Vorrichtung zur Ermittlung eines Kettenrisses im Förderband von kettengetriebenen Förder- und Gewinnungsmaschinen, insbesondere Kettenkratzförderern im untertägigen Berg- und Tunnelbau.

Im untertägigen Berg- und Tunnelbau werden kettengetriebene Betriebsmittel vor allem als Förderanlagen im Strebbereich eingesetzt. Bei derartigen Anlagen kann ein Riss im Förderband (z.B. Kettenriss bei Kettenkratzförderern) nur durch optische Beobachtung des Betriebspersonals wahrgenommen werden.

Es sind aber auch schon elektrische Kettenbandüberwachungen für Kettenbandförderer nach dem Oberbegriff der unabhängigen Ansprüche 1 und 2 bekannt, wobei Näherungsschalter eingesetzt werden. So beschreibt die DE—OS—29 16 812 den Einsatz eines Näherungsschalters im Untertrum des Kettenbandförderers in der Nähe des Antriebs. Jeder Mitnehmer des Kettenbandes, der an dem Näherungsschalter vorbeiläuft erzeugt in diesem ein Impuls, der als Signal weitergegeben wird. Bleibt das Signal aus, so wird der Antrieb unterbrochen. Die DE—OS 29 40 094 zeigt zwei in Längsrichtung der Kette beabstandete Näherungsinitiatoren, die abwechselnd ein Signal zu einem elektronischen Bauteil liefern, so dass dieses stets ein Signal erhält. Falls ein Signal ausfällt, führt dies zu einem Abschalten des Antriebs.

Bei dem erwähnten Stand der Technik werden also digital arbeitende Geber verwendet, die nur zwei Zustände angeben. Es hat sich gezeigt, dass mit digital arbeitenden Gebern die Kettenrissüberwachung nicht sicher zu beherrschen ist.

Aufgabe der Erfindung ist es, eine sichere Früherkennung von Rissen im Förderband (Kettenband) und eine dementsprechend frühzeitige Abschaltung der Antriebe zu erzielen. Die Überwachung soll Ober- und Untertrum des Bandes betreffen.

Zur Lösung der Aufgabe ist vorgesehen, dass ein weiterer, dem Obertrum zugeordneter und dem Kettenband zugewandter Induktiver Geber am Hilfsantrieb hinter dem zugehörigen Kettenstern angeordnet ist und dass die induktiven Geber als den Kettenabstand oder die Kettensymmetrie erkennende, bei Normalkette kontinuierliche, nicht schaltende Analogsignale erzeugend ausgebildet und mit einer Auswerteeinheit verbunden sind.

Dabei ist die absolute Geschwindigkeit des Kettenbandes im Obertrum am Hilfsantrieb und/oder im Untertrum am Hauptantrieb, vorzugsweise im Bereich der Antriebe zu messen. Der Auswerteeinheit ist zweckmässig ein Zeittor vorgegeben und dem Ober- und/oder Untertrum eine Zähleinrichtung zugeordnet, so dass beispielsweise ohne weiteres ermittelt werden kann, ob die an sich vorgegebene Anzahl von Kratzern in der bestimmten Zeiteinheit die Zähleinrichtung passiert. Bei Nichteintreten des Ereignisses liegt ein Kettenriss vor, und über die Zähleinrichtung wird der Antrieb stillgesetzt bzw. ein entsprechendes Signal wird gesetzt, dass dann zur Abschaltung führt.

Bei doppelsträngigen Ketten, z.B. Doppelmitten- oder Doppelaussenketten ist es von Vorteil, wenn über die Länge des Förderers sowohl im Obertrum als auch im Untertrum verteilt angeordnete induktive Geber vorgesehen sind, die als den Kettenabstand oder die Kettensymmetrie erkennende, bei Normalkette kontinuierliche, nichtschaltende Analogsignale erzeugend ausgebildet und jeweils paarweise mit einer Auswerteeinheit verbunden sind. Bei Abweichungen von der normalen Kettensymmetrie, z.B. infolge eines gerissenen Kettengliedes, wird das von dem Normalen abweichende Signal zur Abschaltung der Antriebe eingesetzt. Aber auch bei Einfachketten ist dieses Verfahren einsetzbar vor allem mit dem Vorteil der Lokalisierung des Kettenrisses im Untertrum.

Alle die geschilderten verschiedenen Möglichkeiten erlauben es, frühzeitig und korrekt Kettenrisse festzustellen, und zwar auch dann, wenn eine visuelle Inaugenscheinnahme des Kettenbandes gar nicht möglich ist. Vorteilhaft ist dabei insbesondere, daß eine sehr frühzeitige Ermittlung des Kettenrisses möglich ist, und zwar auch dann, wenn Bedienungspersonen nicht im Bereich des Kettenrisses tätig sind. Lange Stillstandzeiten und Probleme beim Zusammenfahren des Kettenbandes entfallen auf diese Weise, so daß der Betrieb derartiger Anlagen, insbesondere Kettenkratzförderer, damit deutlich optimiert werden kann.

Die Erfindung wird nachfolgend durch die Figuren weiter erläutert. Dabei zeigen:

Fig. 1 eine schematisierte Seitenansicht des Kettenkratzförderers mit Haupt- und Hilfsantrieb zugeordneten Gebern,

Fig. 2 über die Länge des Kettenkratzförderers angeordnete Näherungsschalter und

Fig. 3 über die Länge des Kettenkratzförderers angeordnete induktive Geber.

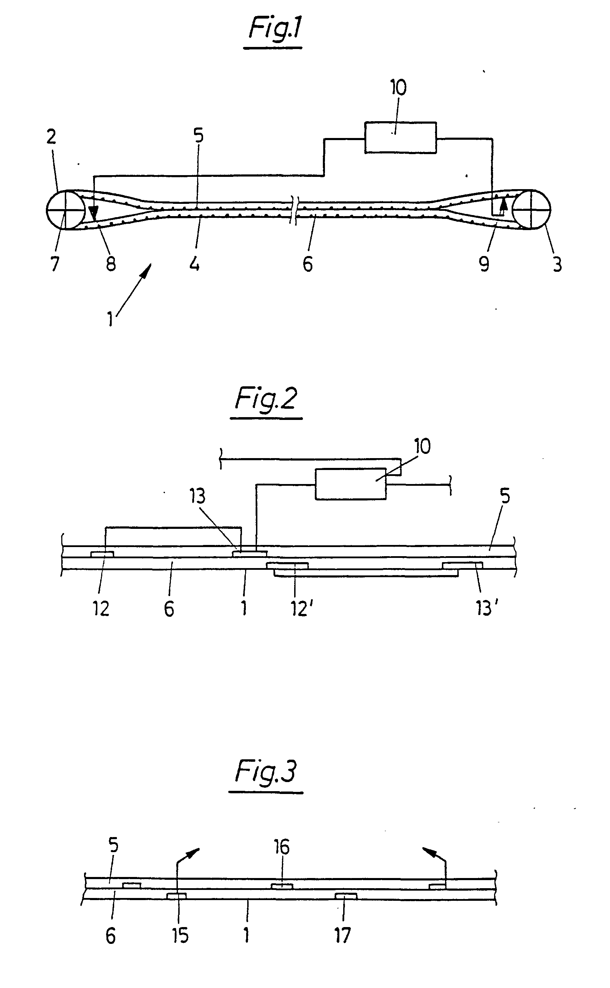

Bei dem in Fig. 1 wiedergegebenen Ausführungsbeispiel ist eine Förderanlage 1 schematisiert dargestellt, bei der zwischen Hauptantrieb 2 und Hilfsantrieb 3 ein Kettenband 4 einmal im Obertrum 5 und einmal im Untertrum 6 vorwärtsgezogen wird.

Im Bereich der Kettensterne 7 sind Meßköpfe 8, 9 angeordnet, die über Leitungen mit einer Auswerteeinheit 10 verbunden sind. Die Meßköpfe 8, 9 sind beispielsweise als induktive Geber ausgebildet, die so gestaltet sind, daß sie den Kettenabstand bzw. die Kettensymmetrie genau wahrnehmen können.

Fig. 2 zeigt eine Kettenrißerkennung durch Auswertung der Relativgeschwindigkeit des Kettenbandes 4 im Obertrum 5 bzw. Untertrum 6. Hierzu sind die Näherungsschalter 12, 13 vorgesehen, die verteilt über die Länge der Förderanlage 1 angeordnet und sowohl dem Unter- wie dem Obertrum 5, 6 zugeordnet sind. Sie sind jeweils paarweise mit der Auswerteeinheit 10 verbunden, wo ein Zähler den vom ersten Näherungsschalter 12 gegebenen Geschwindigkeitstakt hochzählt, der dann anschließend vom zweiten Näherungsschalter wieder zurückgezählt wird.

Fig. 3 schließlich zeigt eine Kettenrißerkennung, bei der bei Ketten die Kettensymmetrie über induktive Geber 15, 16, 17 überwacht wird. Diese induktiven Geber 15, 16, 17 geben kontinuierliche, nichtschaltende Signale ab, so daß bei abweichendem Signal durch anomale Kettenglieder, beispielsweise gerissene Kettenglieder bzw. fehlende Kette, automatisch eine Abschaltung der Antriebe erfolgt.

**Patentansprüche**

1. Vorrichtung zur Ermittlung eines Kettenrisses im Kettenband von kettengetriebenen Förder- und Gewinnungsmaschinen, insbesondere Kettenkratzförderer im untertägigen Berg- und Tunnelbau, wobei ein dem Untertrum (6) zugeorneter und dem Kettenband (4) zugewandter induktiver Geber (8) am Hauptantrieb hinter dem zugehörigen Kettenstern (7) angeordnet ist, dadurch gekennzeichnet, dass ein weiterer, dem Obertrum (5) zugeordneter und dem Kettenband (4) zugewandter induktiver Geber (9) am Hilfsantrieb hinter dem zugehörigen Kettenstern (3) angeordnet ist, und dass die induktiven Geber (8, 9) als den Kettenabstand oder die Kettensymmetrie erkennende, bei Normalkette kontinuierliche, nichtschaltende Analogsignale erzeugend ausgebildet und mit einer Auswerteeinheit (10) verbunden sind.

2. Vorrichtung zur Ermittlung von Kettenrissen bei einfach- und doppelsträngigen Ketten mittels induktiven Gebern, dadurch gekennzeichnet, dass die über die gesamte Fördereranlage sowohl im Obertrum als auch im Untertrum angeordneten induktiven Geber (15, 16, 17) als den Kettenabstand oder die Kettensymmetrie erkennende, bei Normalkette kontinuierliche, nichtschaltende Analogsignale erzeugend ausgebildet und jeweils paarweise mit einer Auswerteeinheit (10) verbunden sind.

**Revendications**

1. Dispositif pour signaler les ruptures de l'équipage mobile de machines de transport ou d'abattage fonctionnant à l'aide de chaînes, en particulier des convoyeurs à chaîne à raclettes utilisés dans l'exploitation minière souterraine et le percement de tunnels, un capteur inductif (8), associé au brin inférieur (6) et tourné vers l'équipage mobile (4) étant disposé sur la tête motrice principale, après sa noix d'entraînement (7), caractérisé en ce qu'un autre capteur inductif (9), associé au brin supérieur (5) et tourné vers l'équipage mobile (4), est disposé sur la tête motrice auxiliaire, après sa noix d'entraînement (3), et que les capteurs inductifs (8, 9) sont réalisés de façon à reconnaître la distance de la chaîne ou la symétrie de la chaîne, en émettant des signaux analogiques continus et ininterrompus si la chaîne est normale et qu'ils sont reliés à une unité convertisseur (10).

2. Dispositif pour signaler au moyen de capteurs inductifs les ruptures de chaîne dans le cas d'équipages mobiles à simple et à double chaîne, caractérisé en ce que les capteurs inductifs (15, 16, 17) répartis sur la longueur du convoyeur, aussi bien dans le couloir supérieur que dans le couloir inférieur, sont réalisés de façon à reconnaître la distance de la chaîne ou la symétrie de la chaîne, en émettant des signaux analogiques continus et ininterrompus si la chaîne est normale, et sont chaque fois raccordés par paire à une unité convertisseur (10).

**Claims**

1. Device for the detection of chain breaks in the conveyer belt of chain-driven conveyer- or cutting machines, in particular of chain-scrapers in underground mining and tunnel construction, in which respect an inductive transmitter (8), associated with the bottom section (6) and facing towards the chain belt (4), is arranged on the main drive behind the respective chain drum (7), characterised in that an additional inductive transmitter (9), associated with the top section (5) and facing towards the chain belt (4), is arranged on the auxiliary drive behind the respective chain drum (3), and that the inductive transmitters (8, 9) are arranged to identify the chain gap or the chain symmetry and to produce continuous, non-switching analog signals with a normal chain, and are connected to an evaluation unit (10).

2. Device for the detection of chain breaks in single- and double-strain chains by means of inductive transmitters, characterised in that the inductive transmitters (15, 16, 17), spaced over the entire conveyer both in the top- and the bottom section, are constructed to identify the chain gap or the chain symmetry and to produce continuous, non-switching analog signals with a normal chain, and are connected each in pairs to an evaluation unit (10).

## Fig.1

## Fig.2

## Fig.3